# FASCICULE DE BREVET EUROPEEN

(11) **EP 0 629 659 B1**
(45) Date de publication et mention de la délivrance du brevet: **22.09.1999**
(21) Numéro de dépôt: 94401349.9
(22) Date de dépôt: 16.06.1994
(51) Int. Cl.: C08L 27/12, C08L 27/16

(54) **Alliage thermoplastique à base de polymère fluoré et de polyester aromatique contenant un agent de compatibilité et son procédé de fabrication**
Thermoplastische Polymerlegierung aus fluoriertem Polymer, aromatischem Polyester und Kompatibilisierungsmittel, und Verfahren zu ihrer Herstellung
Thermoplastic alloy based on fluorinated polymer and aromatic polyester containing a compatibilizer, and process for its production

(30) Priorité: 17.06.1993 FR 9307298
(43) Date de publication de la demande: 21.12.1994
(73) Titulaire: ELF ATOCHEM S.A., 92800 Puteaux, Hauts-de-Seine (FR)
(72) Inventeur: Schlund, Bruno, F-69630 Chaponost (FR); Bouilloux, Alain, F-27300 Bernay (FR)

(56) Documents cités:
- EP-A- 0 540 120
- DE-A- 3 218 502
- CHEMICAL ABSTRACTS, vol. 118, no. 26, 28 Juin 1993, Columbus, Ohio, US; abstract no. 256081, & JP-A-4 372 659 (TONEN KAGAKU K. K.) 25 Décembre 1992

## Description

La présente invention concerne un alliage thermoplastique à base de polymère fluoré et de polyester aromatique comportant un agent de compatibilité. L'agent de compatibilité est un copolymère d'éthylène, d'acrylate de glycidyle et d'acrylate qui permet de rendre compatible des résines thermoplastiques à base de polymère fluoré, plus particulièrement de polyfluorure de vinylidène, et de polyester aromatique, plus particulièrement de polytéréphtalate.

Les polymères fluorés sont connus pour leurs très bonnes propriétés mécaniques, leur excellente tenue thermique et aux intempéries ainsi que leur inertie chimique remarquable. Cependant, compte tenu de leur forte densité, de leur mise en oeuvre délicate ainsi que de leur prix élevé, il a été envisagé de les associer avec d'autres polymères. En particulier, il a été proposé de réaliser des alliages avec des polyesters aromatiques dont les bonnes propriétés mécaniques, électriques, chimiques et thermiques sont connues.

De tels alliages associant des polymères fluorés et des polyesters aromatiques ont des propriétés mécaniques peu satisfaisantes : en particulier, le faible allongement à la rupture et la médiocre résistance au choc sont dus à la mauvaise adhérence entre les phases de polymères fluorés et de polyesters aromatiques.

Afin d'améliorer les propriétés mécaniques de tels alliages, il est nécessaire de leur adjoindre un agent de compatibilité qui permet de faire adhérer les phases entre-elles.

Dans FR 2 389 658, on décrit des alliages thermoplastiques à base de polymère fluoré et de polyester aromatique contenant un agent de compatibilité. L'agent de compatibilité est un copolymère séquencé constitué par un bloc intermédiaire de polymère d'un diène conjugué portant à chaque extrémité un bloc terminal de polymère d'un monoalcénylarène. La présence de l'agent de compatibilité permet d'obtenir un alliage d'aspect plus homogène qui a cependant pour désavantage de ne présenter aucune amélioration de l'allongement à la rupture. En outre, il est nécessaire d'incorporer dans l'alliage au moins 30% d'agent de compatibilité pour observer une augmentation de la résistance au choc.

La demande de brevet EP-A-0540120 décrit une composition comprenant un polyester thermoplastique, un ou plusieur autres polymères choisis dans le groupe des polyamides, polyoléfines et leurs mélanges, et un copolymère d'éthylène contenant des groupes époxy. Ce dernier copolymère est un modifiant choc et compatibilise les mélanges de polyesters thermoplastiques avec les polyamides ou les polyoléfines.

La demande de brevet JP-A-04372659 décrit un mélange thermoplastique comprenant 100 parties de 5-95 % de polythioarylènes et 95-5 % de polyfluorure de vinylidène (PVDF), avec 1 à 50 parties de copolymères greffés méthylméthacrylate-carboxylate insaturé de glycidyle.

Il a maintenant été trouvé un moyen permettant de rendre compatible un polymère fluoré et un polyester aromatique qui conduit à un alliage thermoplastique ayant de bonnes propriétés d'allongement à la rupture et de résistance au choc.

Cet alliage thermoplastique est particulièrement recommandé pour la fabrication d'articles utilisés dans le domaine du génie chimique, lesdits articles devant résister à des environnements chimiques très agressifs. Cet alliage présente également des propriétés diélectriques qui permettent son utilisation dans le domaine de la câblerie, en particulier celui qui concerne les transmissions électriques sous hautes fréquences.

L'alliage thermoplastique selon l'invention est caractérisé en ce qu'il comprend un polymère fluoré, un polyester aromatique et un agent de compatibilité comportant une pluralité de motifs de formule:

- (CH₂ - CH₂) - (I)

et 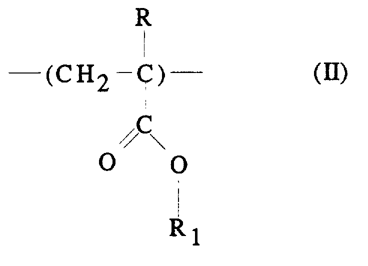 et 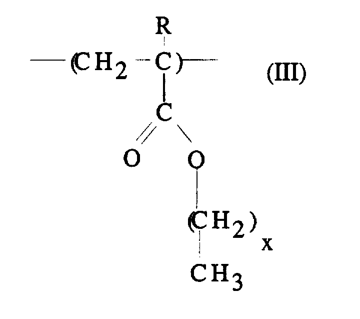 et éventuellement 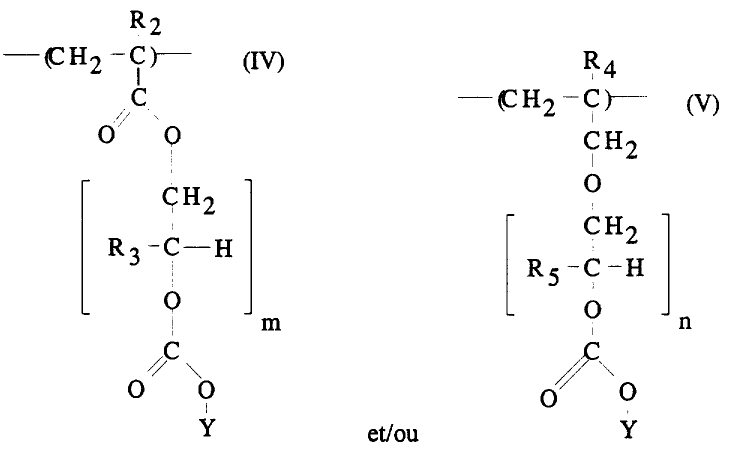 dans lesquels
R, R₂ représentent un atome d'hydrogène, un groupement alkyle contenant 1 ou 2 atomes de carbone 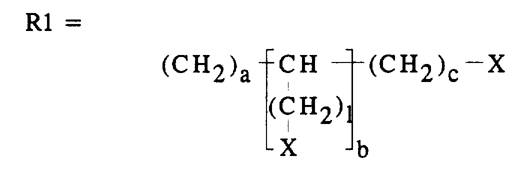
X représentant CH₃ ou 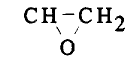 et où au moins un X représente 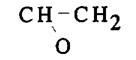 avec :
   a représentant un nombre de 1 à 10
   b étant égal à 0 ou 1
   c représentant un nombre de 0 à 10
   l représentant un nombre de 0 à 10
R₃, R₅ représentent un atome d'hydrogène ou un groupement méthyle
R₄ représente un atome d'hydrogène ou un groupement alkyle contenant de 1 à 4 atomes de carbone
m représente 1ou 2
n représente 0 ou 1 ou 2
x représente un nombre de 0 à 10
Y représente : H ou 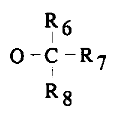 où R₆, R₇, identiques ou différents, représentent un groupement alkyle contenant de 1 à 4 atomes de carbone, R₈ représente un groupement alkyle contenant de 1 à 12 atomes de carbone, phényle, alkylphényle ou cycloalkyle contenant de 3 à 12 atomes de carbone
   ou

   〉(CH-CH₂)- ou -(CH₂-CH)〈 (Ia)

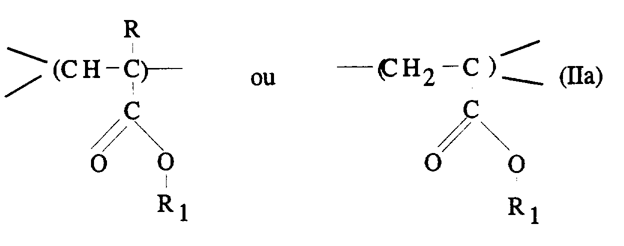

   ou 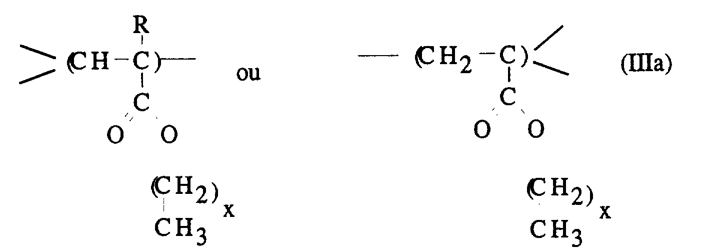 ou 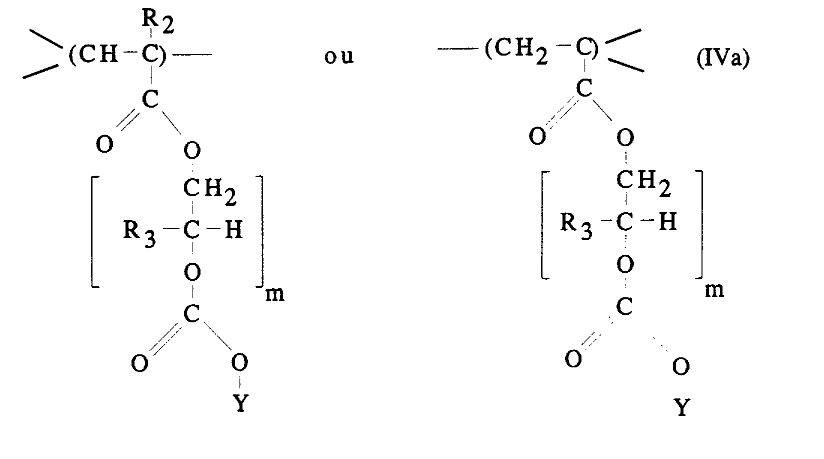 ou 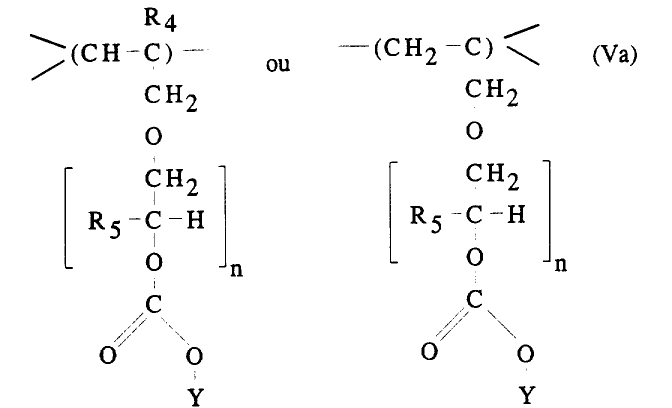
les motifs de formule (Ia), (IIa), (IIIa), (IVa) et (Va) pouvant être liés à des motifs de formule (I), (II), (III), (IV) ou (V) et,
en ce que l'agent de compatibilité comporte
- de 29 à 70% en poids de motif de formule (I)
- de 0,5 à 30 % en poids de motif de formule (II)
- de 10 à 70% en poids de motif de formule (III)
- et de 0 à 10% en poids de motif de formule (IV) et/ou (V) et de plus,
en ce que l'alliage thermoplastique comprend de 2 à 20 parties en poids d'agent de compatibilité pour 100 parties en poids du mélange constitué par le polymère fluoré et le polyester aromatique et enfin en ce que ce mélange comprend
* de 51 à 90 parties en poids de polymère fluoré
* et de 10 à 49 parties en poids de polyester aromatique.

L'agent de compatibilité selon l'invention possède habituellement un poids moléculaire compris entre 5000 et 1.10⁸ et de préférence entre 1.10⁴ et 1.10⁶.

A titre d'exemples spécifiques des précurseurs des motifs de formule (II), on peut citer les monomères d'acrylate de glycidyle de formule : 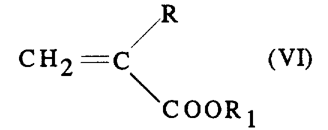 dans laquelle R et R₁ ont les significations données précédemment.

On utilise avantageusement le méthacrylate de glycidyle.

A titre d'exemples spécifiques des précurseurs des motifs de formule (III), on peut citer les monomères d'acrylate de formule 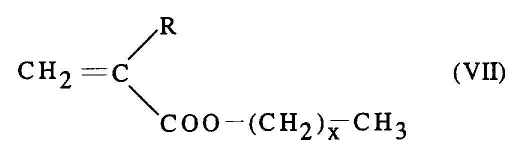 dans laquelle R et x ont les significations données précédemment.

On utilise avantageusement l'acrylate d'éthyle et le méthacrylate de méthyle.

A titre d'exemples spécifiques des précurseurs des motifs de formule (IV) et (V), on peut citer les peroxydes de formule 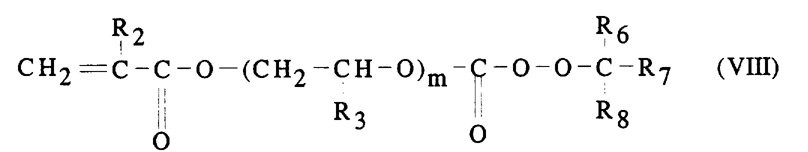 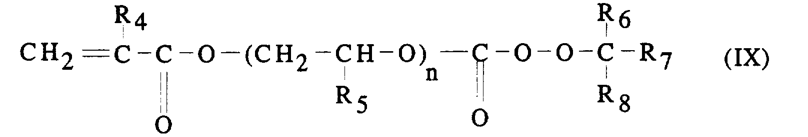 dans lesquelles R₂, R₃, R₄, R₅, R₆, R₇, R₈, m et n ont les significations données précédemment.

L'agent de compatibilité de l'alliage selon l'invention qui comporte les motifs de formule (I), (II) et (III) est principalement obtenu selon le procédé connu de copolymérisation radicalaire sous haute pression. Le procédé consiste à faire réagir les précurseurs desdits motifs à une température comprise entre 50 et 300° C sous une pression de 500 à 3000 bars en présence d'initiateurs de type peroxyde organique. La quantité d'initiateurs de copolymérisation est comprise entre 0,0001 et 0,1% en poids du poids total des monomères de départ.

Lorsque l'agent de compatibilité de l'alliage selon l'invention comporte aussi des motifs de formule (IV) et/ou (V), celui-ci est principalement obtenu selon le procédé qui consiste à :
a - préparer un copolymère comprenant les motifs de formule (I) et (II) ou (III) ou un terpolymère comprenant les motifs de formule (I) et (II) et (III) selon le procédé connu de polymérisation radicalaire sous haute pression,
b - mettre en contact le polymère ainsi obtenu avec une solution comprenant le(s) monomère(s) de formule (VI) et/ou (VII), le(s) monomère(s) de formule (VIII) et/ou (IX), un peroxyde initiateur de polymérisation et un agent de transfert dans un réacteur maintenu à une température comprise entre 60 et 85°C pendant plusieurs heures,
c - soumettre le produit lavé à l'eau puis séché ainsi obtenu à un traitement dans une extrudeuse portée à une température d'environ 200°C.

Le polymère fluoré de l'alliage selon l'invention est de préférence choisi parmi les polyfluorures de vinylidène. A titre d'exemples spécifiques, on peut citer les homopolymères et les copolymères contenant au moins 50% en moles de restes de monomère de fluorure de vinylidène (VF₂). On utilise avantageusement le polyfluorure de vinylidène (PVDF) et les copolymères de fluorure de vinylidène et de chlorotrifluoroéthylène (VF₂-C₂F₃Cl) ou de fluorure de vinylidène et d'hexafluoropropène (VF₂-C₃F₆) contenant de 0,1 à 30 % de C₂F₃Cl ou de C₃F₆ et de préférence de 2 à 15 %.

Le polyester aromatique de l'alliage selon l'invention est de préférence choisi parmi les polytéréphtalates. A titre d'exemples spécifiques, on peut citer le polyéthylènetéréphtalate (PETP), polypropylènetéréphtalate (PPTP) et le polybutylènetéréphtalate (PBTP). On utilise avantageusement le PETP et le PBTP.

La présente invention a également pour objet un procédé de préparation de l'alliage thermoplastique selon l'invention. Ce procédé est caractérisé en ce qu'il consiste à mélanger le polymère fluoré, le polyester aromatique et l'agent de compatibilité définis précédemment dans une extrudeuse portée à une température suffisante pour fondre les constituants du mélange et former des granulés.

Les températures d'extrusion sont généralement comprises entre 50 et 180°C dans la zone d'alimentation et entre 220 et 280°C à la sortie de la filière. Les températures préférées sont respectivement 175 et 240°C.

Selon un mode de préparation préféré, on utilise le polymère fluoré, le polyester aromatique et l'agent de compatibilité sous forme de granulés. On mélange manuellement ou mécaniquement les constituants puis on réalise l'extrusion du mélange.

Les granulés d'alliage thermoplastique selon l'invention, obtenus après extrusion, peuvent être utilisés pour tout type de transformation, tel que la fabrication de tubes expansés ou non-expansés, films, plaques, pièces injectées ou moulées.

Les caractéristiques mécaniques de l'alliage selon l'invention qui ont été examinées sont la résistance à la traction, à la flexion, au choc et à la pliure.

Les essais de traction sont réalisés sur des éprouvettes découpées à l'emporte-pièce dans une plaque de 0,8 mm d'épaisseur moyenne moulée à la presse à 230° C. La forme des éprouvettes répond à la norme ASTM D 1708 et les essais de traction sont effectués selon la norme ASTM D 638.

Les essais de flexion sont réalisés selon la norme ISO R 178 sur des éprouvettes injectées à 240° C.

Les essais de résistance au choc sont réalisés sur des barreaux entaillés selon la norme ASTM 256.73.

La résistance à la pliure est mesurée sur un jonc extrudé de 10 cm de long et 3 mm de diamètre. Ce jonc est entaillé en son milieu sur le pourtour sur une profondeur de 0,1 mm à l'aide d'une lame. La résistance à la pliure est effective lorsque, plié à 180°, le jonc ne rompt pas.

Les mesures physico-chimiques de l'alliage selon l'invention qui ont été réalisées sont la perméabilité à la vapeur d'eau et le retrait volumique.

La perméabilité à la vapeur d'eau est mesurée à 80° C selon la norme NFT 00-030.

Le retrait volumique est mesuré avec un moule calibré de section circulaire de 5 cm de diamètre et 4 mm d'épaisseur rempli de matière fondue sous la presse à 230° C. Lors du refroidissement, la rétractation de l'alliage est déterminée en mesurant le diamètre et l'épaisseur moyens du disque. La différence de volume entre le moule et le disque est exprimée en %.

Parmi les caractéristiques diélectriques de l'alliage selon l'invention il a été examiné la permittivité et le facteur de dissipation (tangente δ). Les mesures sont effectuées selon la norme ASTM D150.

Les exemples suivants illustrent l'invention sans toutefois la limiter. Dans tous les exemples, la proportion en poids du copolymère agent de compatibilité est exprimée en % du poids du mélange constitué par le polymère fluoré et le polyester aromatique. Les proportions des restes de monomère sont exprimées en % en poids de l'agent de compatibilité.

### EXEMPLE 1

On réalise un mélange contenant 72,2% en poids de polyfluorure de vinylidène (PVDF) et 27,8% de polybutylènetéréphtalate (PBTP) préalablement séché une nuit à 110° C. On ajoute à ce mélange 11,1% d'agent de compatibilité constitué par le copolymère comprenant 59,5% de restes de monomère d'éthylène [motif (I)], 10,5% de restes de monomère de méthacrylate de glycidyle [motif (II)], 29,6% de restes de monomère de méthacrylate de méthyle [motif (III)] et 0,4% de restes de monomère de peroxyde [motif (IV) et/ou (V)], par exemple Modiper 4.200 ®.

L'indice de fluidité de ce polymère, mesuré selon la norme ISO 1133. est compris entre 0,2 et 5 g/10 minutes (2,16 kg à 190°C).

Les constituants du mélange sont sous forme de granulés. Le mélange est extrudé sur une extrudeuse dont la vis possède une zone de cisaillement prévue pour la fabrication de granulés (compoundage). Les températures d'extrusion sont 175° C à l'entrée et 240° C en sortie de filière. Les granulés extrudés obtenus sont fondus ou transformés en plaques, barreaux ou éprouvettes selon les besoins des différents tests. Les caractéristiques de l'alliage thermoplastique obtenu après extrusion sont données dans le tableau 1.

### EXEMPLE 2.

Selon l'exemple 1, on réalise l'extrusion d'un mélange contenant 72,2% en poids de PVDF et 27,8% de PBTP. On ajoute à ce mélange 11,1% en poids d'agent de compatibilité constitué par le copolymère comprenant 67% de restes de monomère d'éthylène [motif (I)], 8% de restes de monomère de méthacrylate de glycidyle [motif (II)] et 25% de restes de monomère d'acrylate d'éthyle [motif (III)].

L'indice de fluidité de ce polymère, mesuré selon la norme ISO 1133, est compris entre 4 et 8 g/10 minutes (2,16 kg à 190°C).

Les caractéristiques de l'alliage thermoplastique obtenu après extrusion sont données dans le tableau 1.

### EXEMPLE 3.

Selon l'exemple 1, on réalise l'extrusion d'un mélange contenant 72,2% en poids de copolymère VF₂-C₂F₃Cl contenant 2% de restes de monomère de C₂F₃Cl et 27,8% de PBTP auquel on ajoute 11,1% en poids d'agent de compatibilité de l'exemple 1.

Les caractéristiques de l'alliage thermoplastique obtenu après extrusion sont données dans le tableau 1.

### EXEMPLE 4.

Selon l'exemple 1, on réalise l'extrusion d'un mélange contenant 72,2% en poids de copolymère VF₂-C₂F₃Cl contenant 8% de restes de monomère de C₂F₃Cl et 27,8% de PBTP auquel on ajoute 11,1% en poids d'agent de compatibilité de l'exemple 1.

Les caractéristiques de l'alliage thermoplastique obtenu après extrusion sont données dans le tableau 1.

### EXEMPLE 5

Selon l'exemple 1, on réalise l'extrusion d'un mélange contenant 51,0% en poids de PVDF et 49,0% de PBTP auquel on ajoute 20,0% en poids d'agent de compatibilité de l'exemple 1.

Les caractéristiques de l'alliage thermoplastique obtenu après extrusion sont données dans le tableau 1.

### EXEMPLE 6 (comparatif)

Selon l'exemple 1, on réalise l'extrusion d'un mélange contenant 72,2% en poids de PVDF et 27,8% de PBTP auquel on ajoute 11,1% en poids de polyméthacrylate de méthyle (PMMA).

Les caractéristiques de l'alliage thermoplastique obtenu après extrusion sont données dans le tableau 1.

### EXEMPLE 7 (comparatif)

Selon l'exemple 1, on réalise l'extrusion d'un mélange contenant 72,2% en poids de PVDF et 27,8% de PBTP auquel on ajoute 11,1% en poids d'un copolymère renfermant 60% de restes de monomère d'acrylate de butyle et 40% de restes de monomère de méthacrylate de méthyle.

Les caractéristiques de l'alliage thermoplastique obtenu après extrusion sont données dans le tableau 1.

### EXEMPLE 8 (comparatif)

Selon l'exemple 1, on réalise l'extrusion d'un mélange contenant 100% en poids de PVDF et 15,3 % en poids de PMMA.

Les caractéristiques de l'alliage thermoplastique obtenu après extrusion sont données dans le tableau 1.

### EXEMPLE 9 (comparatif)

Selon l'exemple 1, on réalise l'extrusion d'un mélange contenant 100% en poids de PVDF auquel on ajoute 15,3% en poids d'agent de compatibilité selon l'exemple 2.

Les caractéristiques de l'alliage thermoplastique obtenu après extrusion sont données dans le tableau 1.

### EXEMPLE 10 (comparatif)

On réalise l'extrusion de PBTP selon l'exemple 1.

Les caractéristiques du matériau obtenu sont données dans le tableau 1.

### EXEMPLE 11 (comparatif)

On réalise l'extrusion de PVDF selon l'exemple 1.

Les caractéristiques du matériau obtenu sont données dans le tableau 1.

### EXEMPLE 12 (comparatif)

On réalise l'extrusion d'un mélange contenant 65% en poids de PVDF et 35% de PBTP selon l'exemple 1.

Les caractéristiques de l'alliage thermoplastique obtenu sont données dans le tableau 1.

### EXEMPLE 13 (comparatif)

On réalise l'extrusion de polyéthylènetéréphtalate (PETP) selon l'exemple 1.

Les caractéristiques de la résine thermoplastique obtenue sont données dans le tableau 1.

### EXEMPLE 14

Selon l'exemple 1, on réalise l'extrusion d'un mélange contenant 72,2% en poids de PVDF et 27,8 % de PETP auquel on ajoute 11,1% en poids d'agent de compatibilité de l'exemple 1.

Les caractéristiques de l'alliage thermoplastique obtenu après extrusion sont données dans le tableau 1.

### EXEMPLE 15 (comparatif)

Selon l'exemple 1, on réalise l'extrusion d'un mélange contenant 65% en poids de PVDF et 35% de PETP.

Les caractéristiques de l'alliage thermoplastique obtenu après extrusion sont données dans le tableau 1

### EXEMPLE 16

Selon l'exemple 1, on réalise l'extrusion d'un mélange contenant 72,2% en poids de PVDF et 27,8 % de PETP auquel on ajoute 11,1% en poids d'agent de compatibilité de l'exemple 2.

Les caractéristiques de l'alliage thermoplastique obtenu après extrusion sont données dans le tableau 1.

### EXEMPLE 17 (comparatif)

Selon l'exemple 1, on réalise l'extrusion d'un mélange contenant 72,2 % en poids de PVDF et 27,8% de PETP auquel on ajoute 11,1% en poids de PMMA.

Les caractéristiques de l'alliage thermoplastique obtenu après extrusion sont données dans le tableau 1.

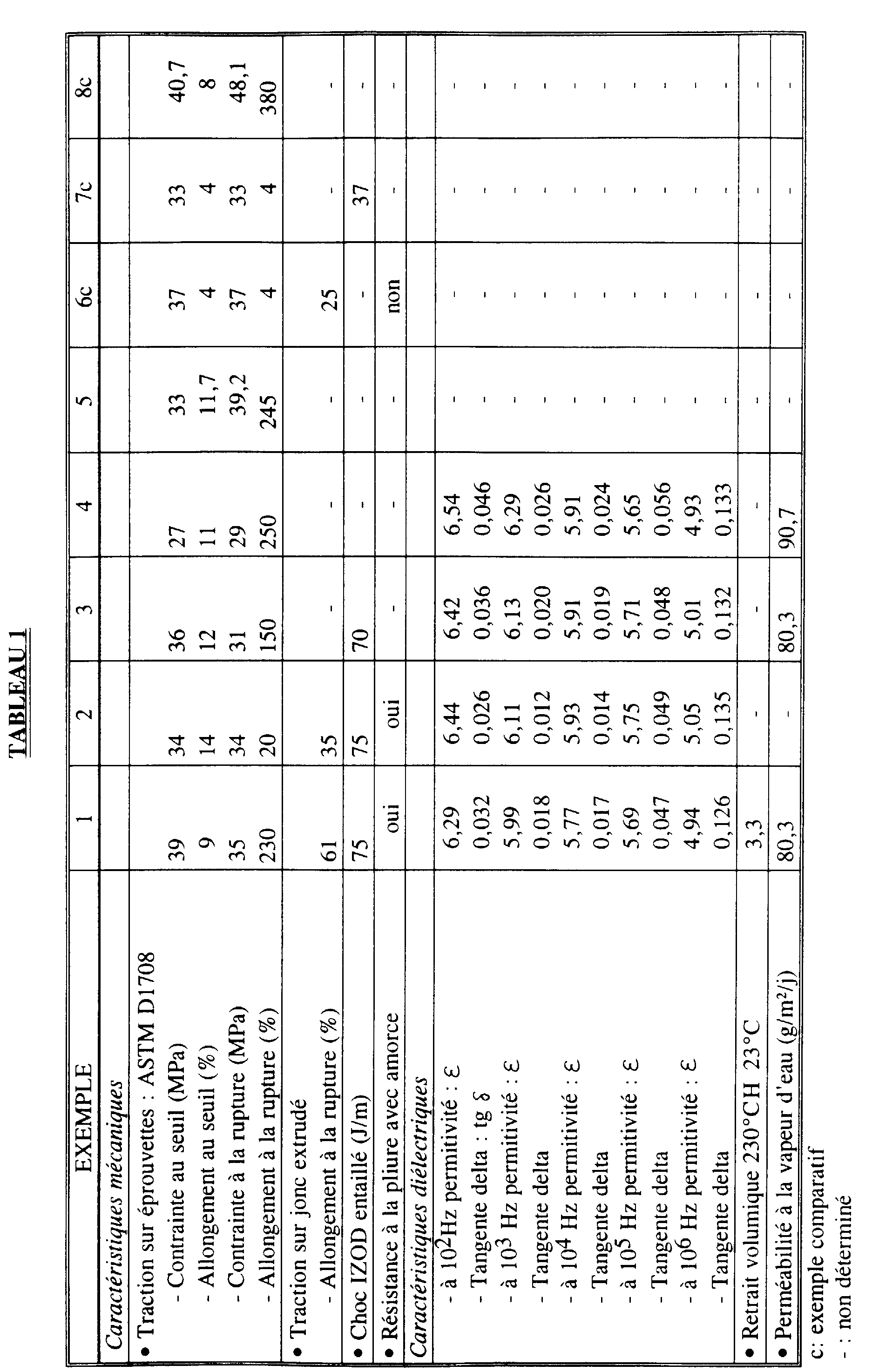

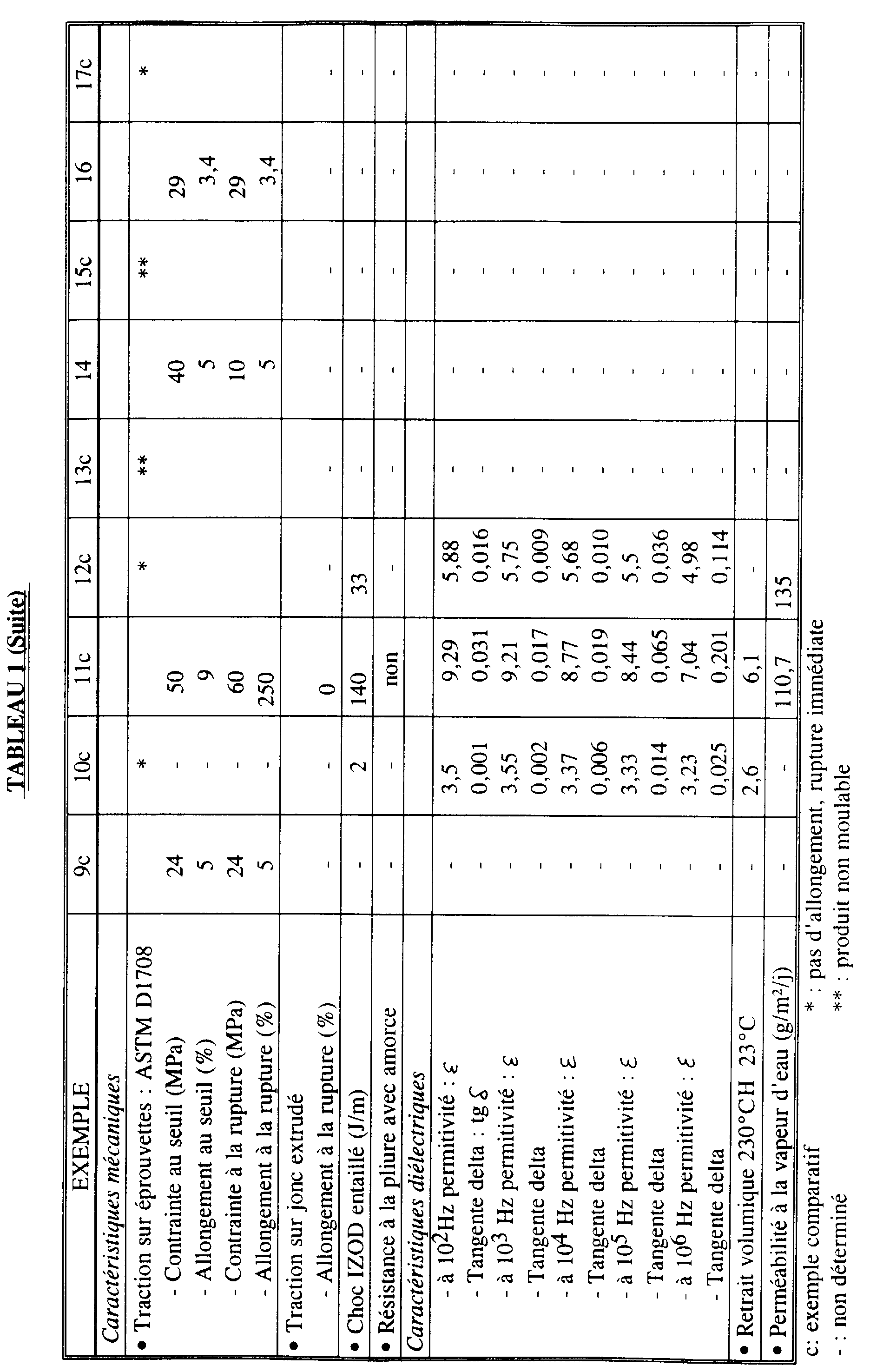

## Revendications

1. Alliage thermoplastique caractérisé en ce qu'il comprend un polymère fluoré, un polyester aromatique et un agent de compatibilité comportant une pluralité de motifs de formule
- (CH₂ - CH₂) - (I)
et 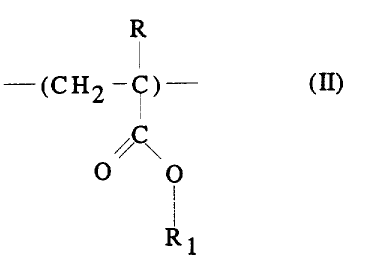 et 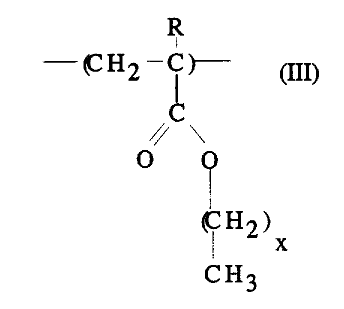 et éventuellement 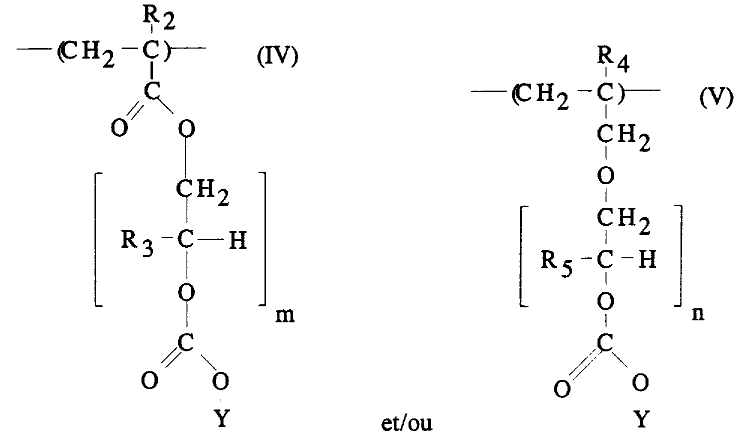 dans lesquels
R, R₂ représentent un atome d'hydrogène, un groupement alkyle contenant 1 ou 2 atomes de carbone 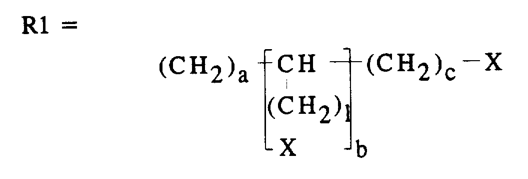
X représentant CH₃ ou 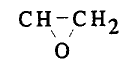 et où au moins un X représente 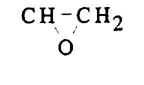 avec :
a représentant un nombre de 1 à 10
b étant égal à 0 ou 1
c représentant un nombre de 0 à 10
l représentant un nombre de 0 à 10
R₃, R₅ représentent un atome d'hydrogène, un groupement méthyle
R₄ représente un atome d'hydrogène, un groupement alkyle contenant de 1 à 4 atomes de carbone
m représente 1ou 2
n représente 0 ou 1 ou 2
x représente un nombre de 0 à 10
Y représente : H ou 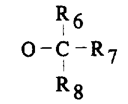 où R₆, R₇, identiques ou différents, représentent un groupement alkyle contenant de 1 à 4 atomes de carbone, R₈ représente un groupement alkyle contenant de 1 à 12 atomes de carbone, phényle, alkylphényle ou cycloalkyle contenant de 3 à 12 atomes de carbone
ou
〉(CH-CH₂)- ou -(CH₂-CH)〈 (Ia)
ou 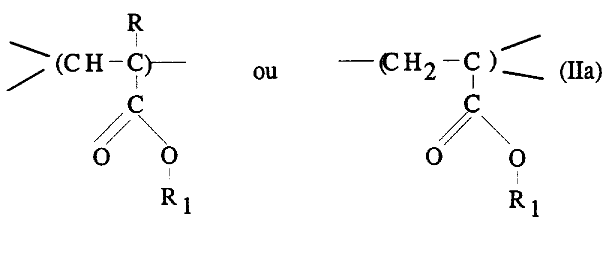 ou 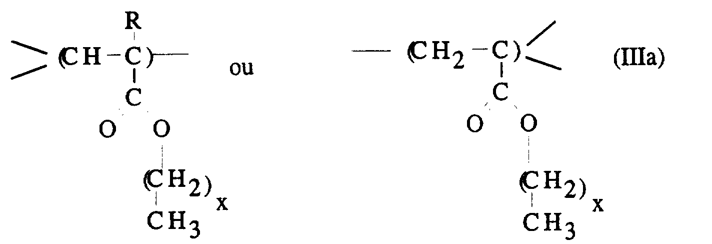 ou 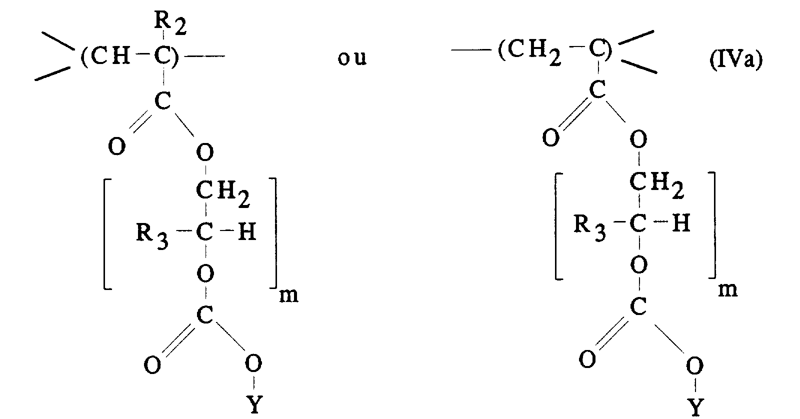 ou 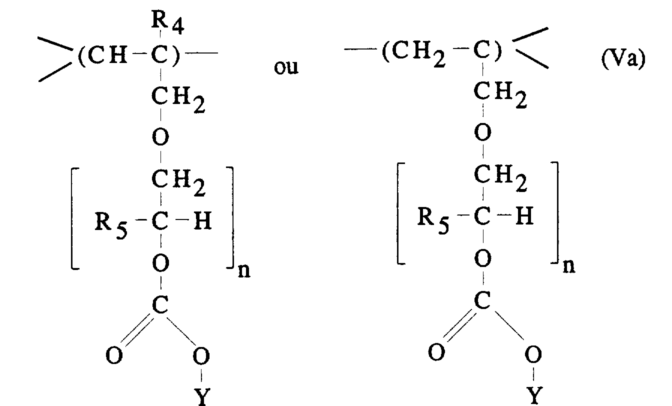
les motifs de formule (Ia), (IIa), (IIIa), (IVa) et (Va) pouvant être liés à des motifs de formule (I), (II), (III), (IV) ou (V) et en ce que l'agent de compatibilité comporte
- de 29 à 70% en poids de motif de formule (I)
- de 0,5 à 30 % en poids de motif de formule (II)
- de 10 à 70% en poids de motif de formule (III)
- et de 0 à 10% en poids de motif de formule (IV) et/ou (V) et de plus en ce que l'alliage thermoplastique comprend de 2 à 20 parties en poids d'agent de compatibilité pour 100 parties en poids du mélange constitué par le polymère fluoré et le polyester aromatique et enfin en ce que ce mélange comprend
* de 51 à 90 parties en poids de polymère fluoré
* et de 10 à 49 parties en poids de polyester aromatique.

2. Alliage thermoplastique selon la revendication 1, caractérisé en ce que l'agent de compatibilité a un poids moléculaire compris entre 5000 et 1.10⁸.

3. Alliage thermoplastique selon la revendication 2, caractérisé en ce que l'agent de compatibilité a un poids moléculaire compris entre 1.10⁴ et 1.10⁶.

4. Alliage thermoplastique selon l'une des revendications 1 à 3, caractérisé en ce que le polymère fluoré est un polyfluorure de vinylidène.

5. Alliage thermoplastique selon la revendication 4, caractérisé en ce que le polyfluorure de vinylidène est choisi parmi les homopolymères ou les copolymères contenant au moins 50% en moles de restes de monomère de fluorure de vinylidène.

6. Alliage thermoplastique selon l'une des revendications 1 à 5, caractérisé en ce que le polyester aromatique est un polytéréphtalate.

7. Alliage thermoplastique selon la revendication 6, caractérisé en ce que polytéréphtalate est choisi parmi le polyéthylènetéréphtalate, le polypropylènetéréphtalate et le poly-butylènetéréphtalate.

8. Procédé de fabrication de l'alliage thermoplastique selon l'une des revendications 1 à 7, caractérisé en ce qu'il consiste à mélanger le polymère fluoré, le polyester aromatique et l'agent de compatibilité dans une extrudeuse portée à une température suffisante pour fondre les constituants du mélange et former des granulés.

9. Procédé selon la revendication 8, caractérisé en ce que la température dans la zone d'alimentation de l'extrudeuse est comprise entre 50 et 180° C.

10. Procédé selon l'une des revendications 8 ou 9, caractérisé en ce que la température à la sortie de la filière de l'extrudeuse est comprise entre 220 et 280°C.

## Patentansprüche

1. Thermoplastisches Gemisch, dadurch gekennzeichnet, daß es ein fluoriertes Polymer, einen aromatischen Polyester und einen Verträglichkeitsvermittler, mit einer Vielzahl von Grundeinheiten der Formeln aufweist
- (CH₂- CH₂) - (I)
und 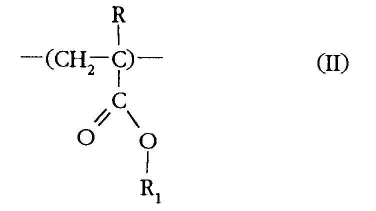 und 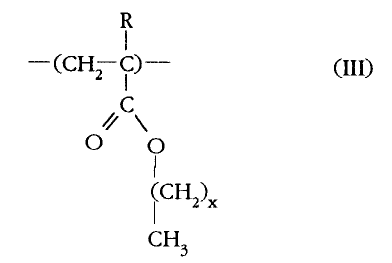 und gegebenenfalls 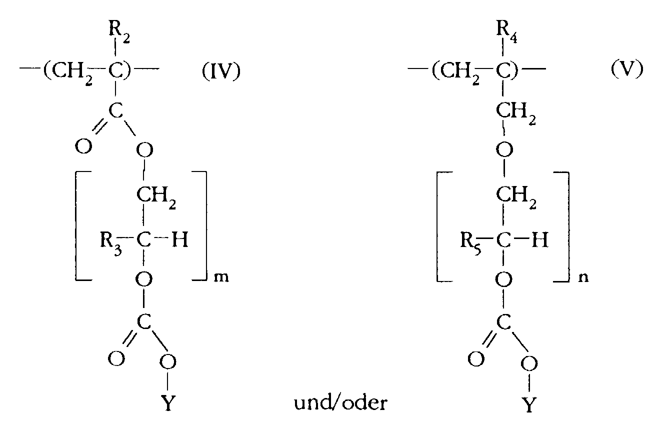 in denen
R und R₂ ein Wasserstoffatom oder eine Alkylgruppe mit 1 oder 2 Kohlenstoffatomen bezeichnen, 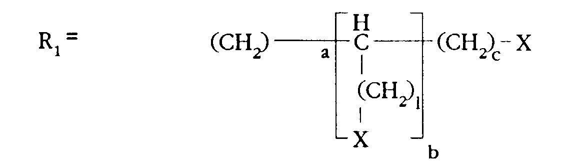
wobei X CH₃ oder 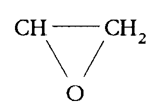 bedeuten
und mindestens ein X 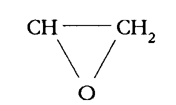
mit
a einer Zahl von 1 bis 10,
b gleich 0 oder 1,
c einer Zahl von 0 bis 10,
l einer Zahl von 0 bis 10, ist
R₃, R₅ ein Wasserstoffatom oder eine Methylgruppe,
R₄ ein Wasserstoffatom oder eine Alkylgruppe mit 1 bis 4 Kohlenstoffatomen, m 1 oder 2,
n 0 oder 1 oder 2,
x eine Zahl von 0 bis 10, bedeuten
Y H oder 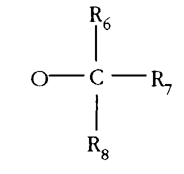 ist, wobei
R₆, R₇ gleich oder verschieden, eine Alkylgruppe mit 1 bis 4 Kohlenstoffatomen,
R₈ eine Alkylgruppe mit 1 bis 12 Kohlenstoffatomen, Phenyl, Alkylphenyl oder Cycloalkyl mit 3 bis 12 Kohlenstoffatomen oder
〉(CH-CH₂)- oder -(CH₂-CH)〈 (Ia)
oder 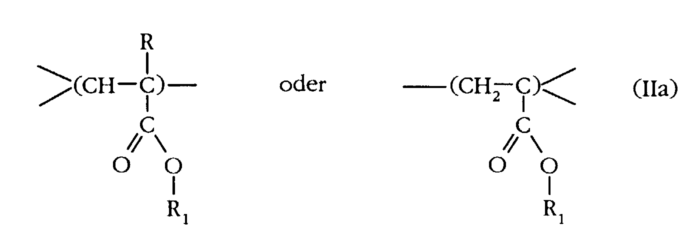 oder 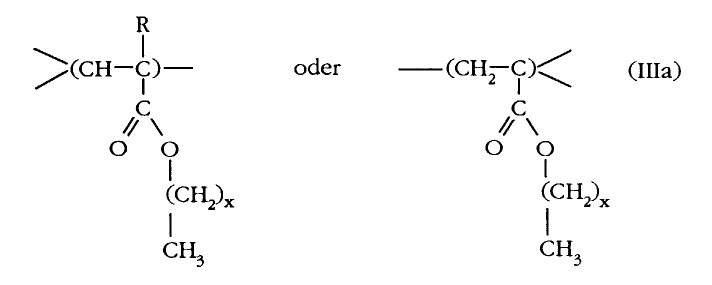 oder 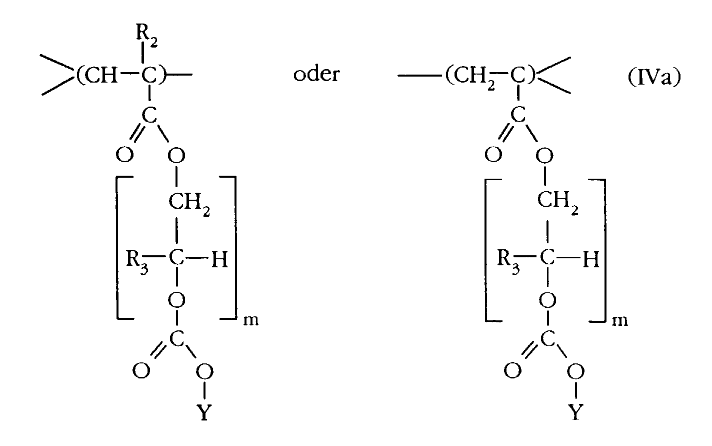 oder 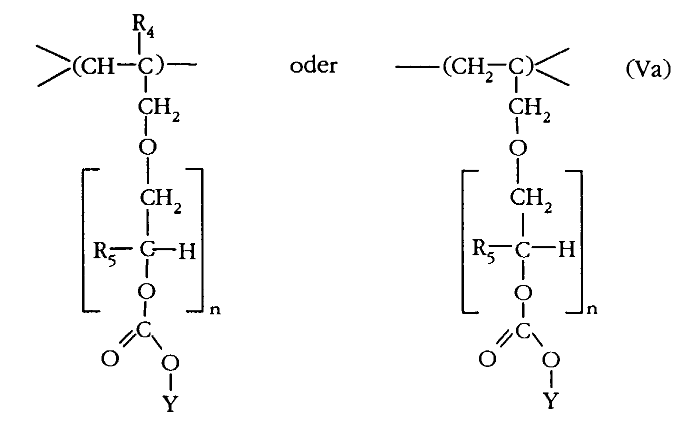 bedeuten,
wobei die Grundeinheiten der Formeln (Ia), (IIa), (IIIa), (IVa) und (Va) an Grundeinheiten der Formeln (I), (II), (III), (IV) oder (V) gebunden sein können und daß der Verträglichkeitsvermittler
- 29 bis 70 Gew.-% Grundeinheit der Formel (I)
- 0,5 bis 30 Gew.-% Grundeinheit der Formel (II)
- 10 bis 70 Gew.-% Grundeinheit der Formel (III) und
- 0 bis 10 Gew.-% Grundeinheit der Formel (IV) und/oder (V)
enthält
und daß außerdem das thermoplastische Gemisch 2 bis 20 Gewichtsteile des Verträglichkeitsvermittlers, bezogen auf 100 Gewichtsteile des Gemisches, aus den fluorierten Polymeren und dem aromatischen Polyester, enthält und daß das Gemisch schließlich
- 51 bis 90 Gewichtsteile des fluorierten Polymeren und
- 10 bis 49 Gewichtsteile des aromatischen Polyesters enthält.

2. Thermoplastisches Gemisch nach Anspruch 1, dadurch gekennzeichnet, daß der Verträglichkeitsvermittler ein Molekulargewicht zwischen 5.000 und 1·10⁸ aufweist.

3. Thermoplastisches Gemisch nach Anspruch 2, dadurch gekennzeichnet, daß der Verträglichkeitsvermittler ein Molekulargewicht zwischen 1 · 10⁴ und 1·10⁶ aufweist.

4. Thermoplastisches Gemisch nach einem der Ansprüche 1 bis 3, dadurch gekennzeichnet, daß das fluorierte Polymere ein Polyvinylidenfluorid ist.

5. Thermoplastisches Gemisch nach Anspruch 4, dadurch gekennzeichnet, daß das Polyvinylidenfluorid aus den Homopolymeren oder Copolymeren ausgewählt ist, das mindestens 50 Mol-% der Monomereinheiten von Vinylidenfluorid enthält.

6. Thermoplastisches Gemisch nach einem der Ansprüche 1 bis 5, dadurch gekennzeichnet, daß der aromatische Polyester ein Polyterephthalat ist.

7. Thermoplastisches Gemisch nach Anspruch 6, dadurch gekennzeichnet, daß das Polyterephthalat aus Polyethylenterephthalat, Polypropylenterephthalat und Polybutylenterephthalat ausgewählt ist.

8. Verfahren zur Herstellung eines thermoplastischen Gemisches nach einem der Ansprüche 1 bis 7, dadurch gekennzeichnet, daß es darin besteht, das fluorierte Polymere, den aromatischen Polyester und den Verträglichkeitsvermittler in einem Extruder zu vermischen, der auf eine zum Schmelzen der Komponenten des Gemisches und zur Granulatbildung ausreichende Temperatur gebracht ist.

9. Verfahren nach Anspruch 8, dadurch gekennzeichnet, daß die Temperatur im Einfüllbereich des Extruders zwischen 50 und 180 °C liegt.

10. Verfahren nach einem der Ansprüche 8 oder 9, dadurch gekennzeichnet, daß die Temperatur am Ausgang der Extruderdüse zwischen 220 und 280 °C liegt.

## Claims

1. Thermoplastic blend, characterized in that it comprises a fluoropolymer, an aromatic polyester and a compatibilizing agent containing a plurality of units of formula
-(CH₂-CH₂)- (I)
and 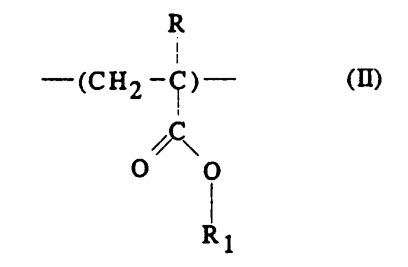 and 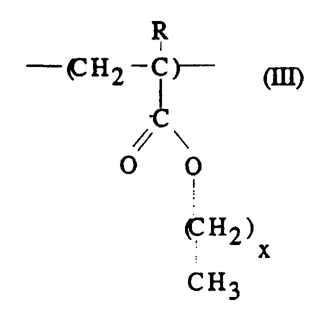 and optionally 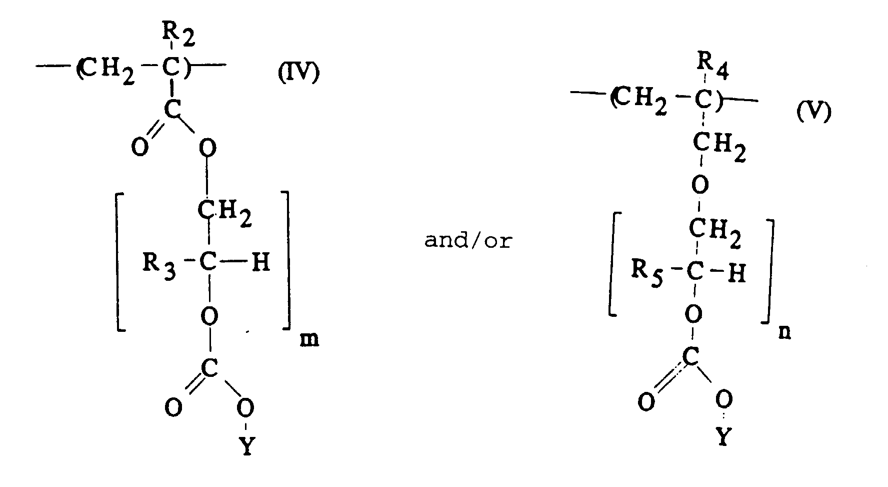 in which
R and R₂ represent a hydrogen atom or an alkyl group containing 1 or 2 carbon atoms, 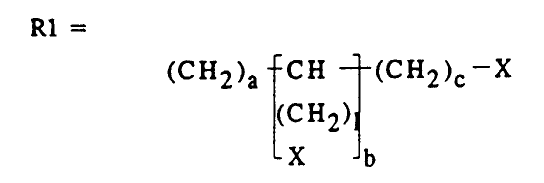
X representing CH₃ or 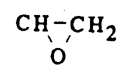 and at least one X representing 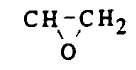 where:
a represents a number from 1 to 10
b is 0 or 1
c represents a number from 0 to 10
l represents a number from 0 to 10,
R₃ and R₅ represent a hydrogen atom or a methyl group,
R₄ represents a hydrogen atom or an alkyl group containing 1 to 4 carbon atoms,
m represents 1 or 2
n represents 0 or 1 or 2
x represents a number from 0 to 10
Y represents H
or 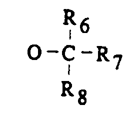 in which R₆ and R₇ which are identical or different represent an alkyl group containing 1 to 4 carbon atoms, and
R₈ represents an alkyl group containing 1 to 12 carbon atoms, phenyl, alkylphenyl or cycloalkyl containing 3 to 12 carbon atoms,
or
〉(CH-CH₂)- or -(CH₂-CH)〈 (Ia)
or 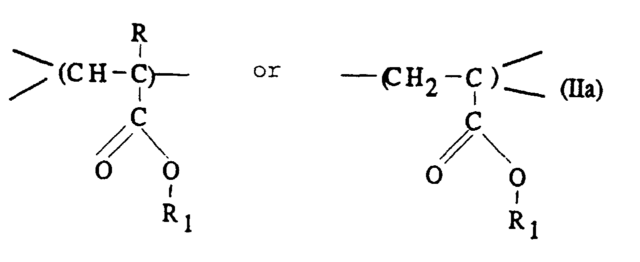 or 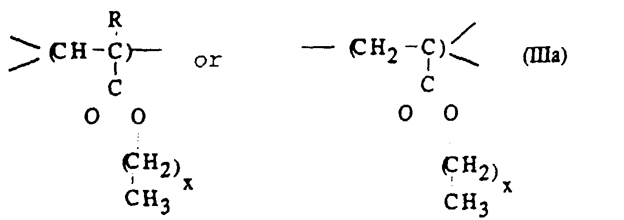 or 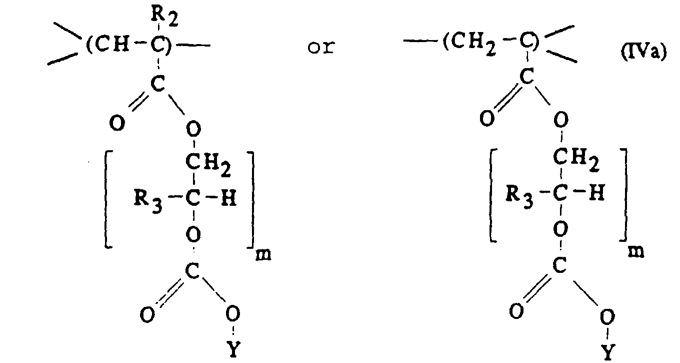 or 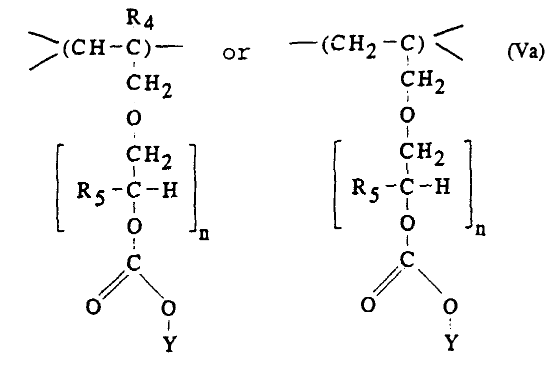
it being possible for the units of formula (Ia), (IIa), (IIIa), (IVa) and (Va) to be attached to units of formula (I), (II), (III), (IV) or (V), and in that the compatibilizing agent comprises
- from 29 to 70 % by weight of units of formula (I)
- from 0.5 to 30 % by weight of units of formula (II)
- from 10 to 70 % by weight of units of formula (III) and
- from 0 to 10 % by weight of units of formula (IV) and/or (V), and additionally in that it comprises from 2 to 20 parts by weight of compatibilizing agent per 100 parts by weight of the mixture consisting of the fluoropolymer and the aromatic polyester, and finally in that the mixture comprises
* from 51 to 90 parts by weight of fluoropolymer and
* from 10 to 49 parts by weight of aromatic polyester.

2. Thermoplastic blend according to Claim 1, characterized in that the compatibilizing agent has a molecular weight of between 5,000 and 1 × 10⁸.

3. Thermoplastic blend according to Claim 2, characterized in that the compatibilizing agent has a molecular weight of between 1 × 10⁴ and 1 × 10⁶.

4. Thermoplastic blend according to one of Claims 1 to 3, characterized in that the fluoropolymer is a vinylidene polyfluoride.

5. Thermoplastic blend according to Claim 4, characterized in that the polyvinylidene fluoride is chosen from the homopolymers or copolymers containing at least 50 mol% of vinylidene fluoride monomer residues.

6. Thermoplastic blend according to one of Claims 1 to 5, characterized in that the aromatic polyester is a polyterephthalate.

7. Thermoplastic blend according to Claim 6, characterized in that the polyterephthalate is chosen from polyethylene terephthalate, polypropylene terephthalate and polybutylene terephthalate.

8. Process for the production of the thermoplastic blend according to one of Claims 1 to 7, characterized in that it consists in mixing the fluoropolymer, the aromatic polyester and the compatibilizing agent in an extruder which has been brought to a temperature which is sufficient to melt the constituents of the mixture and to form granules.

9. Process according to Claim 8, characterized in that the temperature in the feed zone of the extruder is between 50 and 180°C.

10. Process according to either of Claims 8 and 9, characterized in that the temperature at the extruder die exit is between 220 and 280°C.
